# EUROPEAN PATENT SPECIFICATION

(11) **EP 4 171 896 B1**
(45) Date of publication and mention of the grant of the patent: **12.06.2024**
(21) Application number: 21737421.4
(22) Date of filing: 28.06.2021
(51) Int. Cl.: B25J 15/00, B25J 15/06

(54) **PICKING DEVICE**
PFLÜCKVORRICHTUNG
DISPOSITIF DE PRÉLÈVEMENT

(30) Priority: 29.06.2020 DK PA202070428
(43) Date of publication of application: 03.05.2023
(73) Proprietor: LEGO A/S, 7190 Billund (DK)
(72) Inventor: HOÉ, Mikkel Schildknecht, 7190 Billund (DK)
(74) Representative: Guardian IP Consulting I/S
(86) International application number: PCT/EP2021/067710
(87) International publication number: WO 2022/002857

(56) References cited:
- DE-A1-102015 225 148
- DE-B4-102006 022 855
- JP-A- 2019 058 972
- US-A1- 2017 072 572

## Description

The present invention relates to a picking device for picking and handling workpieces of a predetermined type from a worktable surface. The picking device may be of the vacuum picking device type.

### Background of the invention

Picking devices for automatically transporting workpieces from one workstation and setting them of in a second work station are known in the art. The collector head of such devices, configured for interacting with the workpieces are may be very complex mechanisms that are expensive and require very high precision to control the collector arm (robot arm). An exemplary device is disclosed in the European patent application EP 3 064 325 A1. This device has collector head having a contoured depression, shaped for the workpiece to be picked/grabbed.

US 10,357,883 B1 discloses a vacuum picking robot for picking and handling items, having an end effector in the form of a cylindrical pliable bladder, wherein the front surface of the pliable bladder is deformable to provide an air tight fit with large items, such as American footballs. Another picking device is shown in DE102006022855 B4.

### Summary of the invention

It is therefore an object of the invention to increase the variety of options, and to provide a simple, efficient way of providing ways of picking workpieces from a worktable and subsequently handling the workpieces.

In a first aspect of the invention, this is achieved by a picking device for picking workpieces having a predetermined shape from a worktable surface, the picking device comprising
- a collector arm having a first end and a second end;
- a collector head provided at the second end of the collector arm;
the collector arm being configured for moving the collector head relative to the worktable surface, and aligning the collector head relative to the workpiece (when the workpiece is located on the worktable surface), wherein the collector head comprises
- a base connecting to the second end of the collector arm and having a distal surface, and
- a front piece arranged distalmost on the base of the collector head,
wherein the front piece comprises a body formed in a resilient, pliable material, the body comprising
- a proximal surface at a proximal end of the body and configured for connecting to the distal surface of the base;
- a distalmost surface formed at an opposite, distal end of the body and parallel to the proximal surface; and
- a depression extending in the proximal direction from the distalmost surface, the depression having a bottom surface and one or more sidewalls extending between the bottom surface and the distalmost surface,

wherein the depression has a contour shaped to mate at least a portion of the shape of the workpiece,
such that when the contour of the depression is aligned with the mating part of the shape of the workpiece on the worktable surface, and when the collector head is pressed over the workpiece, at least the mating portion of the workpiece is received in the depression, and
such that the one or more sidewalls of the depression squeezes on surfaces of the workpiece to hold the workpiece in place between the sidewalls of the depression, when the collector head is lifted from the worktable surface.

The contour of the depression of the front piece is configured such that it is slightly smaller than the matching portion of workpiece. Thereby, when the collector head is pressed over the workpiece, the sidewalls of the depression deforms to receive the mentioned surfaces of the workpiece in press fit between the sidewalls of the depression.

Thus the contour of the depression is dimensioned to receive at least the portion of the shape of the workpiece in a press fit.

This allows the workpiece to be lifted of the worktable and transported to a different location by the picking arm, e.g. to a holder for further treatment.

The workpiece received and held between the sidewalls of the depression, may be released from the sidewalls of the depression by a suitable release mechanism, e.g. an ejector pin. In embodiments, however the workpiece received and held between the sidewalls of the depression, may be released from the sidewalls of the depression by a blow of pressurized gas through a channel though the collector head, which channel terminates through the bottom (bottom surface) of the front piece.

The resilient, pliable material of the body of the body of the front piece of the collector head is preferably plastic in the sense that it returns to it's original shape after a workpiece held/squeezed between the sidewalls depression has been released therefrom.

The bottom (or bottom surface) preferably forms an integrated part of the body of the front piece of the collector head, and is formed in the material of the front piece of the collector head
Thereby, a very flexible picking device is achieved, which may be very easily be adapted to pick/grab various types and shapes of workpieces. The front pieces are very cost efficient and easy to manufacture.

Further, the front piece being formed in a soft/resilient material and covering all portions of the distal end of the collector head protects the workpieces, the worktable, jigs and other parts of the picking device from unintended impacts.

In an embodiment the sidewalls of the front piece has a portion which extends perpendicularly relative to the distalmost surface.

In a further embodiment, a depth of the depression from a rim between the distalmost surface and the sidewall of the depression (60) to a bottom surface (65) of the depression (60) at least corresponds to one-half of a thickness of the workpiece (100) at a location between said two surfaces (161, 162) of the workpiece facing away from each other.

The bottom surface of the depression is distal relative to the proximal surface of the front piece (when the front piece is attached to the base).

In some embodiments a distance between the sidewalls of the depression corresponds to a distance between surfaces of the workpiece, which surfaces of the workpiece face away from each other. In this case the material for the front piece may be chosen such that a friction between the workpiece and the sidewalls of the depression will cause the workpiece to remain held between the sidewalls when the front piece has been pressed over the workpiece resting on the worktable and being lifted therefrom.

Alternatively, the distance between the sidewalls of the depression is smaller than the distance between said two surfaces of the workpiece facing away from each other, such that when the depression is pressed over the workpiece on the worktable, the sidewalls of the depression squeezes on said surfaces of the workpiece.

In an embodiment the sidewalls of the depression are mutually facing, and a common longitudinal axis is defined along the mutually facing sidewalls, and the depression has a first end and a second end in the direction of the longitudinal axis. In a further embodiment hereof, a support surface is provided in extension of the first and/or second end of the depression in the direction of the longitudinal axis, and wherein said support surface extends in a plane parallel to said bottom surface of the depression.

Thereby, a relevant portions of a workpiece grabbed by the collector head may be backed or supported when setting them onto holders of a jig.

In a further embodiment hereof, the support surface is contoured to correspond to a contour of a portion of the workpiece to be picked.

In a further embodiment the resilient, pliable material of the front piece is a silicone.

In a further embodiment, the collector head comprises an intermediary part and wherein a first end of the intermediary part is connected to the distal end of the base and wherein a second end of the intermediary part connects to the proximal end of the front piece.

In further embodiments, the collector head comprises
- a vacuum port formed through base and connectable to a vacuum pump; and
- a suction inlet formed through the bottom surface of the depression, the suction inlet communicating with the vacuum port of the base.

In cases where the collector head comprises an intermediary part, a connection channel (vacuum channel) is formed through the intermediary body to connect the vacuum port formed through the base with the suction inlet formed through the bottom surface of the depression.

This allows a vacuum to be applied to suck a workpiece into the depression and to hold it in place. The combination of providing a squeeze fit (pinch fit) - due to the resilient, pliable material - and a vacuum allows for reducing the demand for vacuum source in a vacuum picking device. Further, the combination allows for a more stable hold on the workpiece when picking it from the worktable.

In further embodiments, a vacuum distributing basin is formed in the bottom surface of the depression and into the body of the front piece, and the suction inlet is formed in the vacuum distributing basin.

In further embodiments, the collector head comprises an intermediary part formed between the base and the front piece, and where a vacuum channel is formed between the vacuum port and the vacuum inlet through the front piece.

In a further embodiment, the picking device is configured for delivering a jet of pressurized gas through the bottom surface of the front piece. Thereby, the workpiece held in the depression may be released from the depression of the collector head when desired.

For this purpose, the picking device may comprise a source of pressurized gas or it may be connectable thereto. The pressurized gas may be led to the collector head through conduits along the collector arm. The pressurized gas may be led through the collector head by an individual channel through the base and the front piece (and in some embodiments having an intermediary piece, through the intermediary piece). However, in embodiments, where the collector head of the picking device comprises
- a vacuum port formed through base and connectable to a vacuum pump; and
- a suction inlet formed through the bottom surface of the depression, the suction inlet communicating with the vacuum port of the base,
the jet of pressurized gas may be delivered through the vacuum port.

In a second aspect of the objects of the invention may be achieved by a method of picking workpieces having a predetermined shape from a worktable surface, using a picking device comprising
- a collector arm having a first end and a second end; and
- a collector head provided at the second end of the collector arm;

wherein the collector arm is configured for moving the collector head relative to the worktable surface, and aligning the collector head relative to the workpiece (when the workpiece is located on the worktable surface)
wherein the collector head comprises
   - a base connecting to the second end of the collector arm and having a distal surface, and
   - a front piece arranged distalmost on the base of the collector head,
wherein the front piece comprises a body, formed in a resilient, pliable material, the body comprising
   - a proximal surface at a proximal end of the body and configured for connecting to the distal surface of the the base;
   - a distalmost surface at an opposite, distal end of the body, and parallel to the proximal surface; and
   - a depression extending in the proximal direction from the distalmost surface, the depression having a bottom surface and one or more sidewalls extending between the bottom surface and the distalmost surface,
wherein the depression has a contour shaped to mate with at least a portion of the shape of the workpiece,
wherein the method comprises
   - placing the collector head over a workpiece such that the sidewalls of the depression are aligned with the mating portion of the shape of the workpiece;
   - pressing the collector head over at least the mating portion of the workpiece such that at least the mating portion of the workpiece is received in the depression and the sidewalls are deformed to squeeze on surfaces of the workpiece;
   - lifting the collector head with the workpiece held in place between the sidewalls of the depression.

In an embodiment, the method further comprising applying a vacuum to the depression to suck the workpiece into contact with the depression.

In an embodiment, the method further comprises moving said collector arm to move the collector head with the workpiece to a second position, and releasing the workpiece from the depression by a jet of pressurized gas delivered to the depression from a source of pressurized gas through the collector head.

Further, the objects of the invention may be achieved by a method of manufacturing a front piece for a collector head for a picking device for picking workpieces having a predetermined shape from a worktable surface, the method comprising
- determining a shape of at least a portion of the workpieces,
- determining a shape of a distal surface of a base of the collector head of the picking device;
- forming, in a in a resilient, pliable material, a body of the front piece, such that the body comprises
   ∘ a proximal surface at a proximal end of the body and configured for connecting to the distal surface of the base;
   ∘ a distalmost surface formed at an opposite, distal end of the body and parallel to the proximal surface;
   ∘ a depression extending in the proximal direction from the distalmost surface, the depression having a bottom surface and one or more sidewalls extending between the bottom surface and the distalmost surface,
   such that the depression is dimensioned to allow a deformation of at least the sidewalls of the depression when a collector head is aligned with and pressed over the workpiece, and to the effect that the workpiece may be held by the sidewalls of the depression when the collector head is lifted.

Also described herein is a picking device for picking workpieces of a predetermined type from a worktable surface, the workpieces having two surfaces facing away from each other, the picking device comprising
- a collector arm having a first end and a second end;
- a collector head provided at the second end of the collector arm;

wherein the collector head comprises
   - a base connecting to the second end of the collector arm, the base being formed in a hard material and having a distal surface, and
   - a front piece arranged distalmost on the collector head,
wherein the front piece is formed in a resilient, pliable material, and comprises a body, the body comprising
   - a proximal surface at a proximal end of the body and configured for connecting to the base;
   - a distalmost surface at an opposite, distal end of the body; and
   - a depression extending inward from the distalmost surface, such that the depression comprises two mutually facing sidewalls, which mutually facing sidewalls are configured to cooperate with said two surfaces of the workpiece to be collected, and
wherein a bottom of the depression is distal relative to the proximal surface of the front piece.

Thereby, a very flexible picking device is achieved, which may be very easily be adapted to pick/grab various types and shapes of workpieces. The front pieces are very cost efficient and easy to manufacture.

Further, the front piece being formed in a soft/resilient material and covering all portions of the distal end of the collector head protects the workpieces, the worktable, jigs and other parts of the picking device from unintended impacts.

In an embodiment the mutually facing sidewalls of the front piece each has at least a portion, which extends perpendicularly relative to the distalmost surface.

In a further embodiment, a depth of the depression from a rim between the distalmost surface and the depression to a bottom surface of the depression at least corresponds to one-half the thickness of the workpiece at a location between said two surfaces of the workpiece facing away from each other.

In some embodiments a distance between the mutually facing sidewalls of the depression corresponds to a distance between the two surfaces of the workpiece facing away from each other. In this case the material for the front piece may be chosen such that a friction between the workpiece and the sidewalls of the depression will cause the workpiece to remain held between the sidewalls when the front piece has been pressed over the workpiece resting on the worktable and being lifted therefrom.

Alternatively, the distance between the mutually facing sidewalls of the depression is smaller than the distance between said two surfaces of the workpiece facing away from each other, such that when the depression is pressed over the workpiece on the worktable, the sidewalls of the depression squeezes on said surfaces of the workpiece.

In a further embodiment a common longitudinal axis is defined along the mutually facing sidewalls, and the depression has a first end and a second end in the directions of the longitudinal axis.

In a further embodiment hereof, a support surface is provided in extension of the first or second ends of the depression in the direction of the longitudinal axis, and the support surface extends in a plane parallel to said bottom surface of the depression.

Thereby, a relevant portions of a workpiece grabbed by the collector head may be backed or supported when setting them onto holders of a jig.

In a further embodiment hereof, the support surface is contoured to correspond to a contour of a portion of the workpiece to be picked.

In a further embodiment the resilient, pliable material of the front piece is a silicone.

In a further embodiment the collector head comprises an intermediary part and wherein a first end of the intermediary part is connected to the distal end of the base and wherein a second end of the intermediary part connects to the proximal end of the front piece.

In further embodiments, the collector head comprises
- a vacuum port formed through base and connectable to a vacuum source; and
- a suction inlet formed through the bottom surface of the depression, the suction inlet communicating with the vacuum port of the base.

This allows for grabbing/picking workpieces into the depression by sucking them into the depression of the collector head by application of a vacuum through the collector head.

In further embodiments, a vacuum distributing basin is formed in the bottom surface of the depression and into the body of the front piece, and the suction inlet is formed in the vacuum distributing basin.

In further embodiments, the collector head comprises an intermediary part formed between the base and the front piece, and where a vacuum channel is formed between the vacuum port and the vacuum inlet through the front piece

It should be emphasized that the term "comprises/comprising/comprised of" when used in this specification is taken to specify the presence of stated features, integers, steps or components but does not preclude the presence or addition of one or more other features, integers, steps, components or groups thereof.

### Brief description of the drawings

In the following, the invention will be described in greater detail with reference to embodiments shown by the enclosed figures. It should be emphasized that the embodiments shown are used for example purposes only and should not be used to limit the scope of the invention.
Fig. 1, in a perspective view, shows a picking device according to one aspect of the invention;
Fig. 2, in a perspective view, shows examples of workpieces;
Fig. 3, in a perspective view, shows a collector head according to another aspect of the invention, and for a picking device, such as the picking device of Fig. 1;
Fig. 4, in a perspective view, shows the collector heard of Fig. 3 holding a workpiece;
Fig. 5, in a perspective view, shows the collector head of Fig. 3 holding a workpiece, but seen from a different angle than in Fig. 4;
Fig. 6, in a perspective view, shows a couple of collector heads as in Figs. 3-5 setting workpieces on a jig;
Fig. 7, shows the same as Fig. 6, but seen from a different angle;
Fig. 8, in a perspective view, shows a collector head according to another embodiment, and for a picking device, such as the picking device of Fig. 1;
Fig. 9 shows a cross section through the collector head of Fig. 8; and
Fig. 10, in a perspective view, shows a couple of collector heads as in Figs. 8 and 9 setting workpieces on a jig.

### Detailed description of the embodiments

Various embodiments are described hereinafter with reference to the figures. Like reference numerals refer to like elements throughout. Like elements will, thus, not be described in detail with respect to the description of each figure. It should also be noted that the figures are only intended to facilitate the description of the embodiments. They are not intended as an exhaustive description of the claimed invention or as a limitation on the scope of the claimed invention. In addition, an illustrated embodiment needs not have all the aspects or advantages shown. An aspect or an advantage described in conjunction with a particular embodiment is not necessarily limited to that embodiment and can be practiced in any other embodiments even if not so illustrated, or if not so explicitly described.

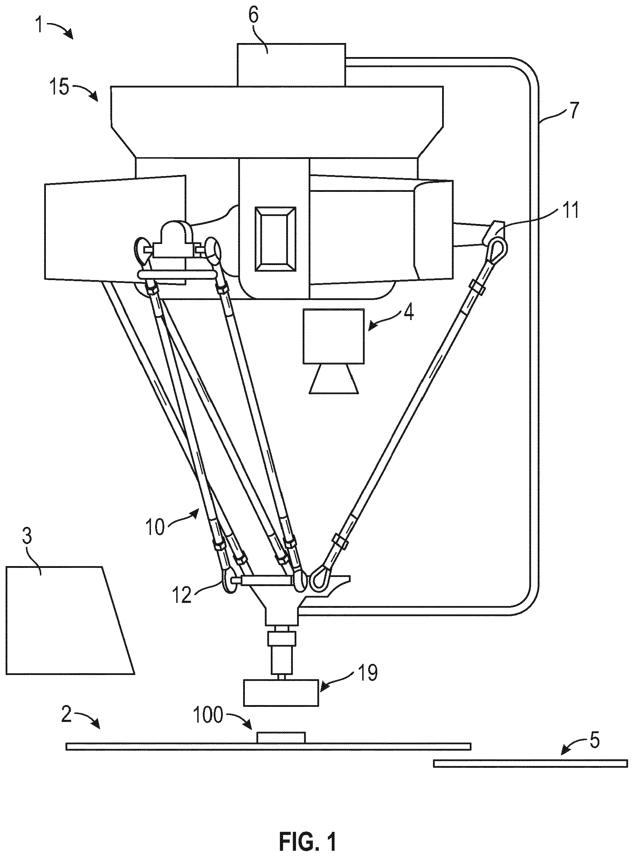

Fig. 1 shows a picking device 1 for picking/collecting and handling workpieces 100 of a predetermined type from a worktable surface 2. The picking device 1 may be a vacuum picking device. The shown picking device 1 comprises a collector arm 10 having a first end 11 and a second end 12. The collector arm comprises a collector head 19 provided at the second end 12 of the collector arm 10, which collector head 19 is configured for collecting/picking workpieces 100 from the worktable 2 and setting them of, for example on a jig 190, as will be described further below.

The shown collector arm 10 is of a type having three articulated sub arms 13. The collector arm may be a standard collector arm known in the art. For example the collector arm may be standard robot arm, such as a delta robot. A delta robot is a type of parallel robot that consists of three arms connected to universal joints at the base. The key design feature is the use of parallelograms in the arms, which maintains the orientation of the end effector, by contrast to Stewart platform that can change the orientation of its end effector. Delta robots have popular usage in picking and packaging in factories because they can be quite fast, some executing up to 300 picks per minute. We note that other types of collector arms may be used as alternatives.

The collector arm 10 is arranged in the vicinity of two worktables 2, arranged side by side. The collector arm 10 has drive and control components 15 at least at the first end 12 of the collector arm 10. The collector arm 10 with its drive and control components 15 is arranged above the worktables 2, and in such a way that the collector arm 10 with it's collector head 19 may reach the worktables 2, and a at least a portion of a conveyor 5. We note that in other embodiments there may be just a single worktable 2. In yet other embodiments, there may be more than two worktables 2 for each collector arm 10, arranged side by side or in other configurations. In yet other embodiments there may be more than one collector arms 10 for one or a plurality of worktables 2.

Above each worktable 2, a hopper (or dispenser) 3 is arranged. The hopper(s) 3 feed workpieces onto the worktable(s) 2. The hopper(s) 3 may receive workpieces 100 from e.g. one or more injection moulding machines (not shown), making workpieces in e.g. plastic.

As shown in Fig. 1, a single hopper 3 may be arranged above each worktable 2. However, in other embodiments there may be two or more hoppers 3 per worktable 2. In yet other embodiments, a hopper 3 may feed workpieces 100 to more than one worktable 2.

The worktables 2 are preferably of the vibrating table type, such that the orientation of workpieces 100 received thereon, dispensed from the hopper 3, may be changed so that the collector arm 10 may pick the workpieces 100 from the worktable 2 even if initially a workpiece lays on the worktable oriented in such a way that it cannot be grabbed by the collector head 19. In such situations, the worktable 2 may be vibrated such that the workpiece 100 may move to be oriented in a way that it may be grabbed/picked.

A camera 4 or other sensor may - as shown in Fig. 1 - be located above one or each of the worktables 2. The camera 4 is connected to a suitable control device (not shown). The control device is further adapted to control movement of the (one or more) collector arm(s) 10.

The control device may comprise software configured for recognizing/identifying workpieces 100 and their location and orientation relative to the worktable 2 from images received from the camera 4, and further be configured for guiding the collector arm 10 and orient the collector head 19, such that a workpiece may be picked/grabbed by the collector head 19 and transported by the collector arm to e.g. a jig 190 (not shown in Fig. 1) to be set off on the jig 190, e.g. for further processing.

In Fig. 1, a conveyor 5 is shown located in front of the worktables 2 (relative to the hoppers 3). The conveyor 5 may carry the above mentioned jigs 190 past the worktables 2, such that the jigs 190 may be filled with workpieces 100 as they pass the worktables 2.

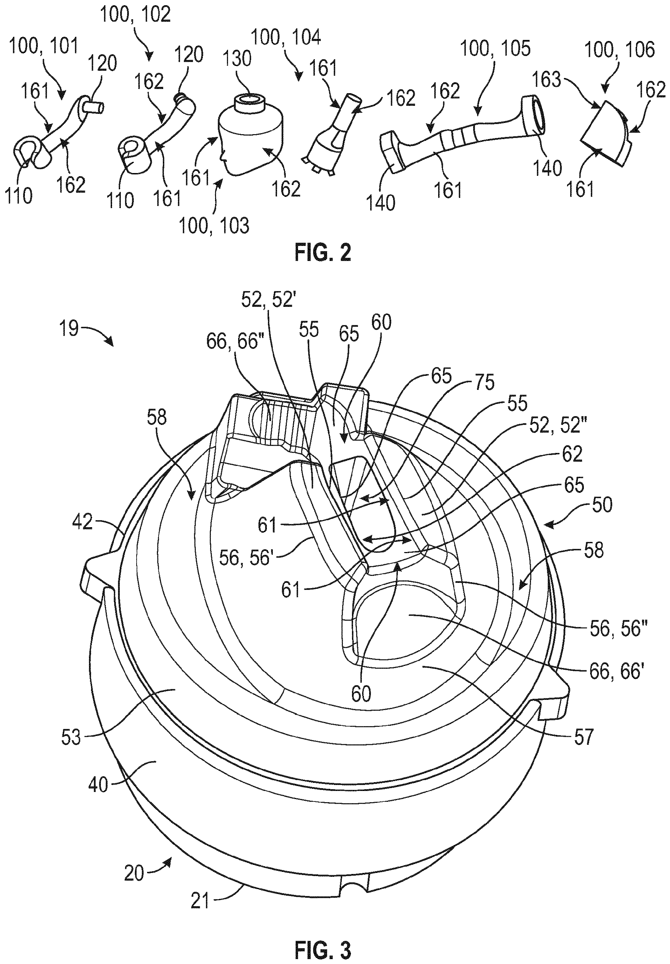

Turning now to Fig. 2 different types of workpieces 100 are shown. The leftmost object, first workpiece 100, 101, in Fig. 2 is a right arm of a toy mini-doll figurine (not shown) formed in e.g. an injection moulding process (not shown). The second object from the left, second workpiece 100, 102, is a corresponding left arm of such a toy mini-doll figurine.

Likewise, the third object from the left, third workpiece 100, 103, is a head of a toy mini-doll figurine, while the fourth object from the left, fourth workpiece 100, 104, is an axel, which may be used in a toy, for example a toy mini-doll figurine.

The fifth object from the left, fifth workpiece 100, 105, is a set of legs for a toy mini-doll figurine. The left and right legs thereof are to be separated from each other in a subsequent process. The picking device according to the invention may for example be used to pick and forward the fifth workpiece to such a separation step of a production process.

The rightmost object, sixth workpiece 100, 106, is pie-piece-shaped tile for a toy construction set as known in the art, and is included to illustrate the variety of shapes of workpieces 100, which may be picked/collected by the picking device 1 according to the invention and be received in the collector head 19 according to the invention, and as further described below.

The picking device 1 and collector head 19 according to the invention may be used to pick such a workpiece 100, 101, 102, 103, 104, 105, 106 from e.g. a work table 2 as described above and placing it onto a jig 200 for further processing, such as providing decorations on the workpiece 100 or simultaneously on a plurality of workpieces 100 on a jig 200. Such a decoration may for example be provided by printing the decoration on the workpiece(s) 100. It will be appreciated that the picking device 1 and collector head 19 according to the invention may be used to pick and transport such between other kinds of processes/treatment, or for packing workpiece(s) 100 or finished objects.

It will be appreciated that any workpiece 100, such as the ones mentioned above, may be formed in an injection moulding process. However, the workpiece(s) 100 may be obtained in many other types of processes.

Common to the workpieces 100 is that they have at least two surfaces 161, 162 facing away from each other. Examples of such surfaces are indicated in Fig. 2. It will however be appreciated that other sets of surfaces facing away from each other could be chosen for each of the types of workpiece 100 shown, for example depending on the position/orientation in a subsequent work process. The picking device 1 and collector head 19 are configured to interact with these surfaces 161. 162 facing away from each other, as will be described below.

We note that the sixth workpiece 100, 106 is an example of a workpiece, where the one of the surfaces facing away from each other may comprise two surface portions. For example, surface 162 faces away from the combination of surfaces 161 and 163.

In any case, it will be appreciated that the surfaces facing away from each other 161, 162 need not be parallel.

It will also be appreciated that the surfaces facing away from each other 161, 162 may be just an edge of the workpiece 100.

It will be further appreciated that between the surfaces facing away from each other 161, 162, a distance is provided. This distance may defined a thickness of the workpiece 100.

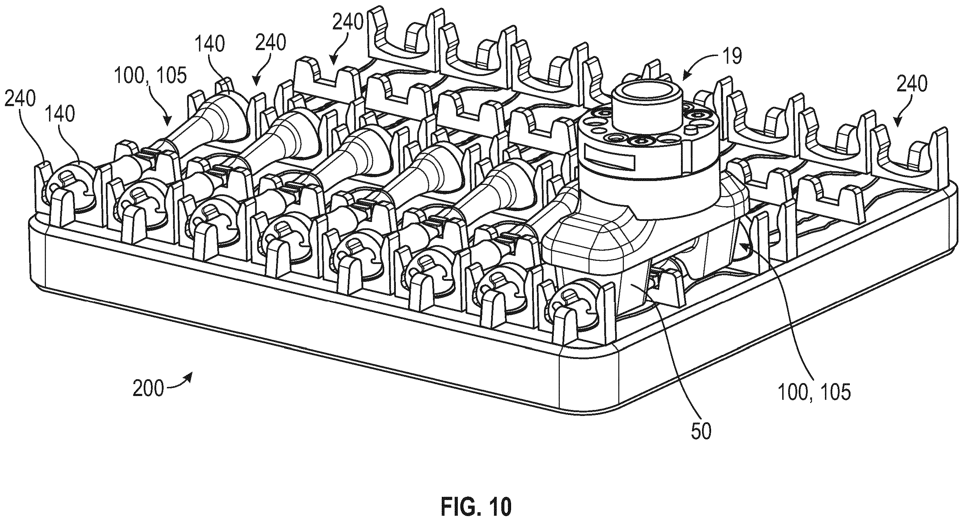

Turning now to Fig. 3, a collector head 19 is shown in a perspective view. The collector head 19 comprises a base 20, which is usually a part of the collector arm 10, or which may form an adapter for connecting to the collector arm 10. The various embodiments of collector heads 19, shown in Figs. 3-10, further comprise an intermediate piece 40, and front piece 50. The front piece 50 is preferably formed in a soft material. A soft material is a resilient and/or pliable material. In one embodiment, the front piece 50 is formed in silicone. Preferably, the material is impermeable by air/gases.

The base 20 comprises a body 23 having a proximal end facing the collector arm 10 and a distal end facing away from the collector arm 10.

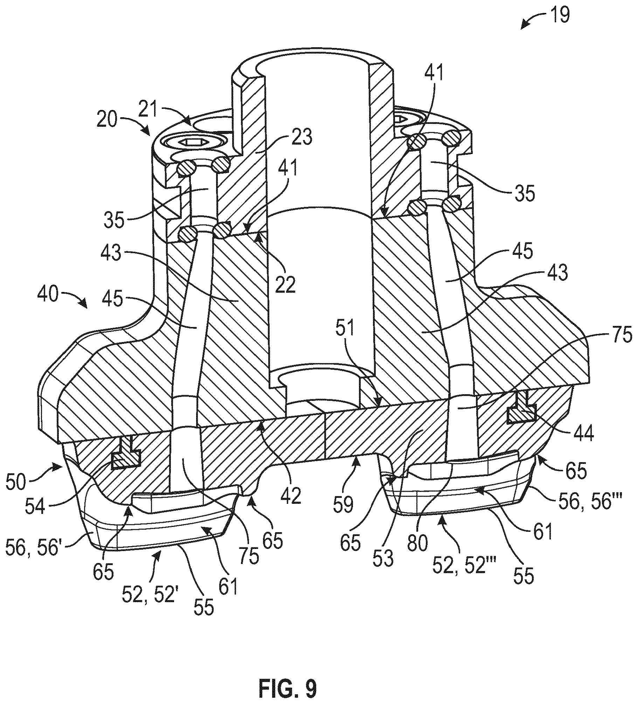

A distal surface 22 (see e.g. Fig. 9) for abutting on the intermediate piece 40 (or the front piece 50 (not shown)), is formed on a body 23 of the base 20, at the distal end of the body 23 of the base 20.

Correspondingly, the intermediate piece 40 has a first surface 41, which is configured for abutting on the distal surface 22 of the base 20. Further, various connecting means (not shown) may be provided on the base 20 and/or the intermediary piece 40, such that the intermediary piece may be connected to the base 20 and thereby to the collector arm 10. Preferably, these connection means are configured for releasably connecting the intermediate piece 40 to the base 20.

A proximal surface formed on the opposite side of the body 23 of the base 20 - relative to the distal surface 22 - is provided with connection means (not shown) for connecting the collector head to the second end 12 (distal end) of the collector arm 10. The base 20 and thereby the collector head 19 may - in some embodiments - be articulated relative to the distal end 12 of the collector arm 10.

The base 20 is preferably made in a rigid material, such as metal, or hard polymer material.

The intermediate piece 40 comprises a body 43 having a proximal end facing the collector arm 10 and a distal end facing away from the collector arm 10. As mentioned, the intermediate piece 40 has a first surface 41, which is configured for abutting on the distal surface 22 of the base 20. The first surface 41 is provided at the proximal end of the body 43 of the intermediate piece 40.

The intermediate piece 40 is configured for connecting the front piece 50 to the base 20, which may as mentioned above be a part of the collector arm 10.

However, it will be appreciated that in principle - in some (not shown) embodiments - a front piece 50 may be connected directly to the base 20, i.e. without an intermediate piece 40 there between. Especially in situations where the base 20 is a part of standard type collector arm 10, the intermediate piece 40, allows for easier adaption of different types of front pieces 50 to the standard base 20.

For example, the soft material used for the front piece 50 may be difficult to connect to the connection means on the hard material base 20. The intermediate piece 40 may therefore comprise more suitable connection means for connecting the soft material front piece 50 to the base 20. Further, in embodiments (see more further below), where for example a vacuum is to be provided through the collector head 19, the intermediate piece 40 may allow for vacuum distribution channels 45 between standard ports of the base 20 and the front piece 50 that would be difficult to provide in the soft material front piece 50.

The intermediate piece 40 further comprises a second surface 42 (see e.g. Fig. 9) arranged opposite the first surface 41 relative to a body 43 of the intermediary piece 40, i.e. at the distal end of the body 43 of the intermediary piece 40. The second surface 42 of the intermediate piece 40 is configured for abutting on a mating proximal surface 51 (see e.g. Fig. 9) of the front piece 50.

The intermediate piece 40 is preferably made in a rigid material, such as a hard polymer material. The intermediate piece may be 3D printed in a rapid manufacturing process.

The front piece 50 comprises a body 53 having a proximal end 50' facing the collector arm 10 and a distal end 50" facing away from the collector arm 10.

The front piece 50 of the collector head 19, as mentioned, has a proximal surface 51 formed at the proximal end 50' of the body 53 of the front piece 50, and configured for abutting on the second surface 42 of the intermediate piece 40. The intermediate piece 40 further comprises connection means 44 for connecting to the front piece 50. The front piece 50 comprises mating connection means 54, see e.g. Fig. 9, where the connection means 44 of the intermediate piece 40 are formed as hooked pegs received in correspondingly shaped openings into the body 53 of the front piece 50.

Opposite to the proximal surface 51 of the body 53 of the front piece 50, at the distal end 50" thereof, a front or distalmost surface 52 is arranged. Preferably, the surface 52 is formed in one plane. Preferably, this plane is parallel to a plane defined by the proximal surface 51 of the front piece 50.

A depression 60 is formed in the distalmost surface 52 of the front piece 50, such that it extends onto the body 53 or at least a portion thereof, and in the proximal direction away from the distalmost surface 52.

In some embodiments (not shown), the distalmost surface 52 is coherent and completely encircling the depression 60. In other embodiments (also not shown), the distalmost surface 52 is coherent and partially encircling the depression 60.

However, as shown in e.g. Figs. 3-7, the distalmost surface 52 may be provided on protruding flanges 56, a first protruding flange 56' and a second protruding flange 56", the protruding flanges 56 protruding in the distal direction from a structure 57 protruding from a distally facing surface or ledge 58 of the body 53 of the front piece 50.

The first protruding flange 56' and the second protruding flange 56" are preferably formed integral with the body 53 of the 53 of the front piece 50. In embodiments where the front piece has a structure 57 protruding from a distally facing surface or ledge 58 of the body 53, the first protruding flange 56', the second protruding flange 56", and the structure 57 are preferably formed integral with the body 53 of the 53 of the front piece 50. The front piece 50 is preferably formed as a unitary structure in one piece and in a soft or resilient material. Preferably, the front piece 50 is formed in silicone. However, the front piece may alternatively be formed in rubber, or a soft polymer.

In one aspect of the invention, the front piece 50 may be moulded (not shown). The mould (not shown) for moulding such a front piece may be 3D printed in a rapid manufacturing process (not shown). Thereby, front pieces 50 for picking specific workpieces of many new variants may quickly be manufactured.

Even though the first protruding flange 56' and the second protruding flange 56" are preferably formed integral with the body 53, they form different or separate flanges (separate from each other). Consequently, the distalmost surface 52, in such embodiments is not coherent, but instead comprises two distalmost sub-surfaces or surface portions 52', 52". Preferably, these two distalmost sub-surfaces or surface portions 52', 52" are provided in the same plane.

This is the case in the embodiment shown in Figs. 3-7, where a first surface portion 52' is formed on the first protruding flange 56' and a second surface portion 52" is formed in the second protruding flange 56". These two distalmost sub-surfaces or surface portions 52', 52" are provided in the same plane, and which plane is parallel to the plane defined by the proximal surface 51 of the front piece 50.

The depression 60, extending inward from the distalmost surface 52 (or distalmost sub-surfaces 52', 52"), as shown in Fig 3, has a bottom wall 65. The bottom wall 65 of the depression 60 is provided distally of the proximal surface 51 of the front piece 50, see e.g. Fig. 9. Further, the bottom wall 65 of the depression 60 is provided distally of the distal surface 22 of the base 20, see e.g. Fig. 9. Further, it is provided distally of the distal surface 42 of the intermediate piece 40.

No parts of the base 20 extend near the distal surface 52, 52', 52". Thereby, it is secured that the hard material base 20 cannot come into contact with the workpieces 100, the worktable surface 2 or the jigs 200 during use, and thereby that the base 20, the workpieces 100, the worktable 2 and/or the jigs 200 are not damaged.

The depression 60 extends inward from the distalmost surface 52, 52', 52" and into the body 53 (or the structure 57) of the front piece 50. Further, the depression 60 extends inward from the distalmost surface 52, 52', 52" such that the depression 60 comprises two mutually facing sidewalls 61, 62. These mutually facing sidewalls 61, 62 are configured to cooperate with the two chosen surfaces 151, 152 (facing away from each other) of the workpiece 100 to be collected.

We note that one or both of the mutually facing sidewalls 61, 62 may comprise two (or more) side wall portions, for example so that they may cooperate with the combination of surfaces 161 and 163 facing away from the surface 162 in the sixth workpiece 106 mentioned above, or other similar objects.

In any case, it will be appreciated that the mutually facing sidewalls 61, 62 need not be parallel, but will be configured to correspond to the surfaces 161, 162 facing away from each other on the workpiece 100.

It will be further appreciated that between mutually facing sidewalls 61, 62, a distance is provided.

A rim 55 may separate the distalmost surface 52, 52', 52" and the mutually facing sidewalls 61, 62.

The mutually facing sidewalls 61, 62 of the depression 60 of the front piece 50, each has at least a potion which extends perpendicularly relative to the distalmost surface 52, 52', 52".

The depression 60 has a depth, as defined from the distalmost surface 52, 52', 52" or the rim 55 to the bottom surface 65 of the depression 60.

Preferably, the depth of the depression corresponds to at least one-half the thickness of the workpiece 100 at a location between said two surfaces 161, 162 facing away from each other of the workpiece 100. In some embodiments, the depth of the depression corresponds to 50-120% of the thickness of the workpiece 100 at a location between said two surfaces 161, 162 facing away from each other of the workpiece 100. In one embodiment, the depth of the depression corresponds to 60-80% of the thickness of the workpiece 100 at a location between said two surfaces 161, 162 facing away from each other of the workpiece 100.

In some embodiments, the distance between the mutually facing sidewalls 61, 62 of the depression 60 is equal to the distance between said two surfaces 161, 162 of the workpiece facing away from each other. In this case, the flexible material, in which the front piece is formed, may be such that a friction between the workpiece 100 and the sidewalls 61, 62 of the depression will cause the workpiece 100 to remain held between the sidewalls 61, 62, when the front piece 50 has been pressed over the workpiece 100 resting on the worktable 2 and being lifted therefrom. A friction fit is formed between the sidewalls 61, 62 of the depression 60, and the two surfaces 161, 162 of the workpiece facing away from each other.

In some embodiments, the distance between the mutually facing sidewalls 61, 62 of the depression 60 is equal to the distance between said two surfaces 161, 162 of the workpiece facing away from each other. In this case, additionally or alternatively to the embodiment describe in the preceding paragraph, a vacuum may be applied through the collector head 19. This option will be described in detail further below. In such embodiments, the vacuum will cause or aid the workpiece 100 to remain held between the sidewalls 61, 62, when the front piece 50 has been pressed over the workpiece 100 resting on the worktable 2 and being lifted therefrom.

In other embodiments, the distance between the mutually facing sidewalls 61, 62 of the depression is smaller than the distance between said two surfaces 161, 162 of the workpiece facing away from each other, such that when the depression 60 is pressed over the workpiece 100, the sidewalls 61, 62 of the depression 60 squeezes on said surfaces 161, 162 of the workpiece 100. This squeezing occurs due to the resilience or softness of the material of front piece 50. In this situation the workpiece is clamped between the sidewalls 61, 62.

As mentioned above, the sidewalls 61, 62 of the depression need not necessarily be parallel to each other, but the sidewalls 61, 62 are facing each other, and such that they are configured to follow a contour of at least a portion of the workpiece 100, which the front piece 50 is configured to pick. A longitudinal axis or a general direction thereby may be defined parallel to the sidewalls 61, 62, or in the same direction as they extend.

However, in an embodiment, the sidewalls 61, 62 of the depression 60 are formed parallel to each other.

In some embodiments, and as shown in Figs. 3-7, the mutually facing sidewalls 61, 62 has a length (dependent on the shape and contour of the workpiece to be picked). The length of each sidewall 61, 62 of the depression need not be the same (dependent on the shape and contour of the workpiece to be picked).

In any case, a support surface 66, 66', 66" may be provided in extension to of the length of the mutually facing sidewalls 61, 62, and along the longitudinal axis or general direction of the mutually facing sidewalls 61, 62 of the depression 60.

The support surface 66, 66', 66" may be formed as a planar surface (For example support surface 66" in Fig.3) or as an imprint (For example support surface 66' in Fig.3), dependent upon and corresponding to a shape/contour of a portion ofhte the workpiece 100 to be picked. The support surface 66, 66', 66" preferably in a plane parallel to said bottom surface 65 of the depression 60 formed in the front piece 50.

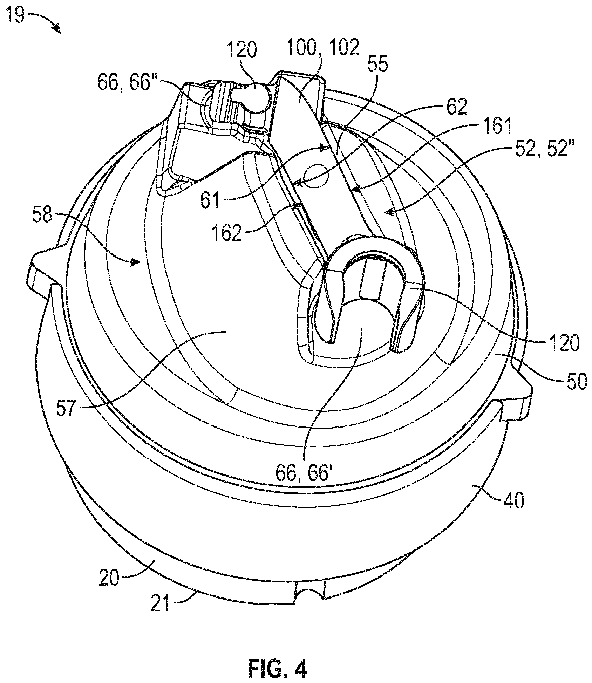

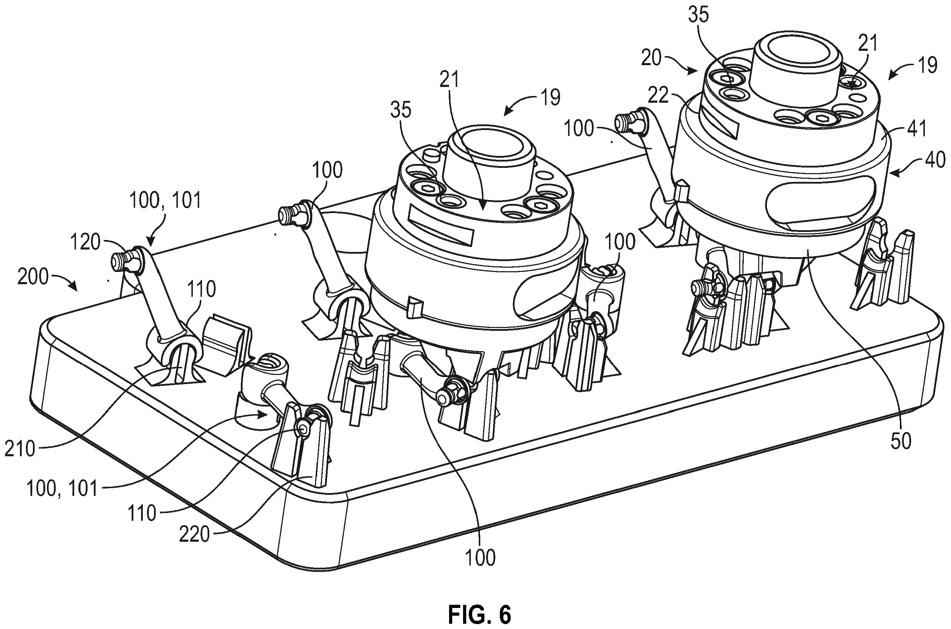

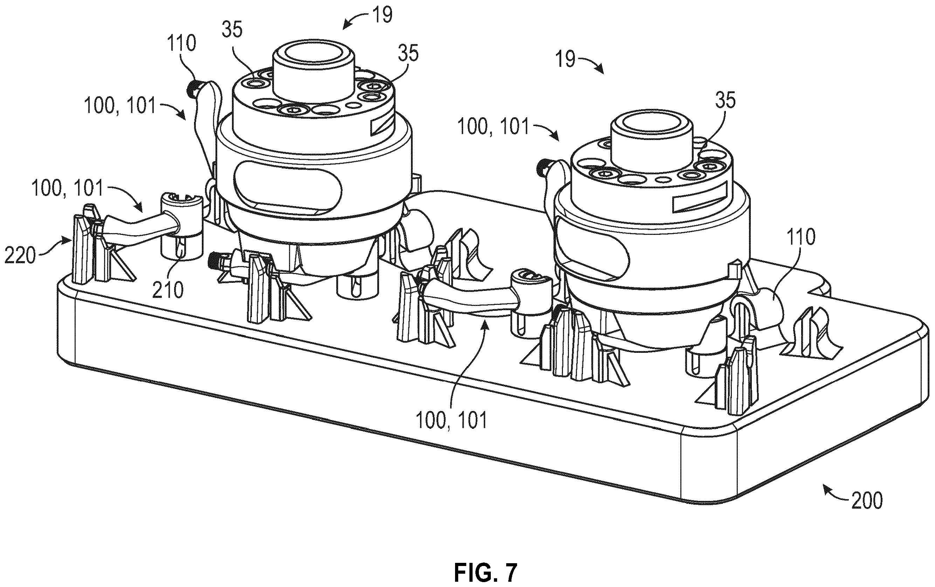

As shown in Figs. 3 and 4, a first support surface 66, 66' is formed at one of the depression 60, which first support surface 66' is formed as an impression of a portion of the workpiece 100, 102 (a left arm of a mini-doll figurine, mini-doll figurine not shown). At one end of the workpiece 102 a connector 120 for providing rotational connection 120 to a mini-doll figurine is formed. This connector 120 is formed with two cylindrical portions having two different diameters. The first support surface 66' is shaped with cooperating indentations into the body 53 of the front piece 50. Thereby, the first support surface 66' will provide a support for the connector 120, which allows the connector 120 to be pushed into a snap lock mechanism 220 provided on a jig 200 as shown in Figs. 6 and 7. Figs. 6 and 7 show the placement of first workpieces 101 in the shape of right arms for the same type of mini-doll figurines as the second workpiece 102, where the connector 120 is identically shaped on the first and second workpieces 101, 102. The connector is pushed into the snap lock mechanism 220 against a resilience of a set of arms of the snap lock mechanism 220.

As also shown in Figs. 3 and 4, a second support surface 66, 66" is formed at the other end of the depression 60, which second support surface 66" is formed as a flat surface in the body 53 of the front piece 50, and corresponding to a flat surface of a portion of the second workpiece 100, 102. At one end of the second workpiece 102 a connector 110 is formed. This connector 110 is formed as a U shape to resemble a stylised hand of a mini-doll-figurine. Thereby, the second support surface 66' will provide a support for the connector 110, which allows the connector 110 to be pushed over and onto either a first stud-shaped connector 210' or a second bead-shaped connector 110" provided on a jig 200 as shown in Figs. 6 and 7.

In more general terms it can be said that each support surface 66, 66', 66" is contoured to correspond to a contour of a portion 110, 120, 130, 140 of the workpiece 100 to be picked.

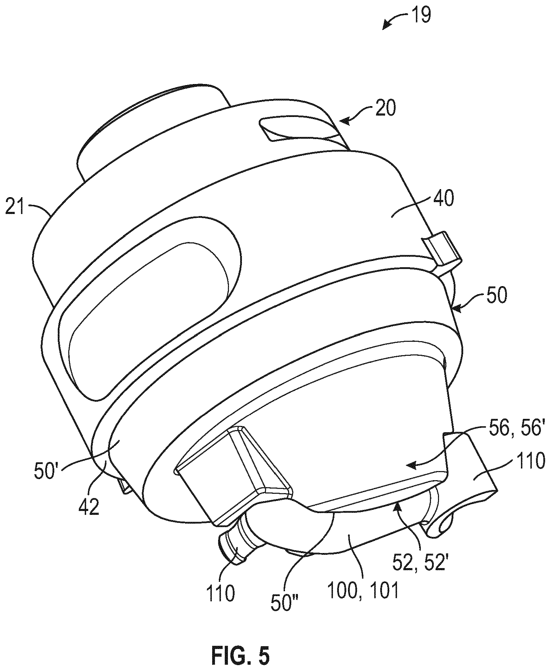

Fig. 5 shows a collector head 19 seen at an angle from below. The collector head 19 comprises a base 20, an intermediary part 40 and a front piece 50. The collector head is the same as illustrated in Figs. 3 and 4, A workpiece 100, second workpiece 102 is located between the sidewalls 61, 62 of the depression.

By such a collector head 19 being connected to a collector arm 10 of a picking device 1, workpieces 100 may be picked from a worktable 2 and be held between thee sidewalls 61, 62 of the depression 60 formed in the front piece 50, such that the workpiece 100 may be moved from the worktable 2, and to a jig 200, which may pass the worktable 2 on a conveyor 5. Figs. 6 and 7 illustrates a situation, where workpieces are being set of on a jig 200. In each of the Figs. 6 and 7, two collector heads 19 are shown. The collector arm 10 or any other part of the picking device are not shown in the figure.

The exemplary jig 200 comprises means to hold workpieces 100 of the type of second workpieces 102 described above.

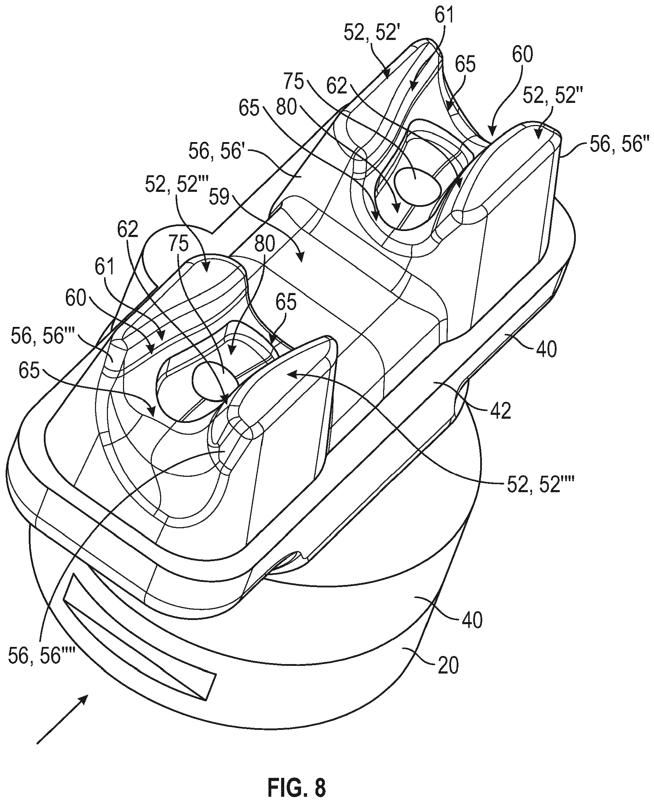

Fig. 8 and 9 shows a collector 19 head according to an embodiment of the invention, wherein the collector head 19 is configured for picking a different type of workpiece, namely a fifth workpiece 105, mentioned above. The fifth workpiece 105 is more elongate in shape than the first and second workpieces 101, 102, described in connection with Figs 3-7 above. For the purpose of better holding such an elongate workpiece 100, 105, the front piece 50 is equipped with two sets of depressions 60 and thus two sets of mutually facing sidewall 61, 62 on a wo sets of first and second protruding flanges 56', 56", similar to those described above. Thereby, the longer fifth workpiece, or other long workpieces 100, may be grabbed at two positions along a length of the workpiece 100 in the same time.

Thus, in the embodiment illustrated in Figs. 7 and 8, a first set of protruding flanges 56 protrude from the body 53 comprising a first protruding flange 56' and a second protruding flange 56", and a second set of protruding flanges 56 comprising a third protruding flange 56‴ and a fourth protruding flange 56" also extends from the body 53.

The front piece 50 thus has two sets of distalmost surfaces 52, a first set comprising a first portion 52' of distalmost surface 52 and a second portion 52" of the distalmost surface 52, and a second set comprising a third portion 52' of the distalmost surface 52 and a fourth portion 52ʺʺ of the distalmost surface 52.

The first portion of distalmost surface 52' is provided on the first protruding flange 56'. The second portion 52" of the distalmost surface 52 is provided on second protruding flange 56". The third portion 52' of the distalmost surface 52 is provided on the third protruding flange 56"'. The fourth portion 52ʺʺ of the distalmost surface 52 is provided on the fourth protruding flange 56".

The collector head 19 shown in Fig. 8, in a perspective view, may be mounted on a collector arm 10 of a picking device 1, in the same manner as the collector head 19 illustrated in Figs. 3-7 above.

Fig. 9 shows a cross section through the collector head 19 of Fig. 8.

In any of the above described embodiments, the collector head 19 may further comprises a vacuum port 35 formed through base 20, the vacuum port 35 of the base being connectable to a vacuum pump (not shown). A suction inlet 75 is formed through the bottom surface 65 of the depression 60 of the front piece 50. The suction inlet 75 communicates with the suction port 35 via a vacuum distributing channel through the collector head 19.

In some embodiments (not shown), where a front piece 50 is connected directly on a base 20, the vacuum port 35 through the base 20 may communicate directly with the suction inlet 75 through the bottom of the depression 60 of the front piece 50.

However, in other embodiments, where the collector head 19 comprises an intermediary piece 40, a vacuum channel 45 is formed through the intermediary piece 40 between the vacuum port 35 through the base 20 and the vacuum inlet 75 formed through the front piece 50.

As shown in Fig. 9, in some embodiments, the base 20 may comprise two individual vacuum ports 35 and two individual suction inlets 75 through the bottom 65 of the depression 60 of the front piece 50. Two separate vacuum channels 45 are formed through the intermediary piece 40 between the each set of vacuum port 35 and vacuum inlet 75.

A vacuum conducting tubing 30 having a first end 31 and a second end 32 may connect the vacuum port 35 in the base 20 of the collector head 19 with vacuum source 33 such as a vacuum pump. The first end 31 of the vacuum conducting tubing 30 is connectable to a vacuum source 33. The second end 32 of the vacuum conducting tubing 30 is connectable to the vacuum inlet 35 formed in the base 20 of the collector head 19. The vacuum source 33 may be provided at the first end 11 of the collector arm 10, the vacuum conducting tubing 30 being conducted along the collector arm 10. In other embodiments, the vacuum source 33 may be carried at the second, distal end 12 of the collector arm 10 in the vicinity of the collector head 19.

Returning now to Fig. 9, it will be appreciated that a vacuum distributing basin 80 may be formed in the bottom surface 65 of the depression 65, the vacuum basin extending into the body 53 of the front piece 50. The suction inlet 75 is formed in the vacuum distributing basin 80. Thus, the vacuum basin 80 is formed surrounding the suction inlet. The vacuum basin 80 is provided to improve the distribution of the vacuum better to provide a suction to workpieces.

In general the depression 60, in either of the embodiments described above can be said to have a second shape or contour resembling a first contour 156 of a at least a portion of a workpiece 100 to be picked/collected.

The front piece 50 could be termed a collector cup. The front piece 50 may be formed in a material having a friction relative to the material of the workpiece, such that the workpiece may be held in the depression without a vacuum being applied, or without the sidewalls 61, 62 being configured to squeeze the workpiece 100.

The embodiments shown in Figs. 3-7 and in Figs. 8-10 illustrate that a vacuum may be applied trough the collector head 19, such that a workpiece may be grabbed by the collector head using the vacuum to such the workpiece into the depression 60. It will, however, be appreciated that the figures also illustrate embodiments, where a vacuum need not be applied to grab/pick a workpiece 100, as described above.

Figs. 8-10 illustrate embodiments, where there are two sets of depressions 60, such that long workpieces 100, 105 may be grabbed in two positions. It will however be appreciated that a corresponding principle may be applied to pick two ( or maybe even three or four workpieces 100, one in each depression 60. Thereby, the collector arm could possibly pick two (or three or four) workpieces and save time on transporting workpieces 100 between the worktable 2 and the conveyor. In such cases the two depressions 60 could have identical contour in order to grab/pick identical objects workpieces 100, but they could also have different contours to grab/pick two different types of workpieces 100.

It is to be noted that the figures and the above description have shown the example embodiments in a simple and schematic manner. Many of the specific mechanical details have not been shown since the person skilled in the art should be familiar with these details and they would just unnecessarily complicate this description.

Although particular features have been shown and described, it will be understood that they are not intended to limit the claimed invention, and it will be made obvious to those skilled in the art that various changes and modifications may be made without departing from the scope of the appended claims.

### List of parts

- 1: picking device
- 2: worktable surface
- 3: hopper or dispenser
- 4: camera
- 5: conveyor
- 6: pump/vacuum pump/compressor/source of vacuum and/or pressurized gas
- 7: conduit from pump to collector head
- 10: collector arm
- 11: first (proximal) end of collector arm
- 12: second (distal) end of collector arm
- 13: sub arm of collector arm
- 15: drive and control components of collector arm
- 19: collector head
- 20: base of collector head
- 21: proximal surface of the base of the collector head
- 22: distal surface of base of collector head
- 23: body of the base
- 35: first vacuum port formed in the base of the collector head
- 40: intermediary piece
- 41: first (proximal) surface of the intermediary piece
- 42: second (distal) surface of the intermediary piece
- 43: body of intermediary body
- 44: connection means on intermediary piece
- 45: vacuum channel formed through intermediary body
- 50: front piece
- 51: proximal surface of front piece
- 52: distalmost surface of front piece/front surface of front piece
- 52': (first) portion of distalmost surface of front piece/front surface of front piece
- 52": (second) portion of distalmost surface of front piece/front surface of front piece
- 52'": (third) portion of distalmost surface of front piece/front surface of front piece
- 52"": (fourth) portion of distalmost surface of front piece/front surface of front piece
- 53: body of front piece
- 54: connection means on front piece
- 55: rim between the distalmost surface of the front piece and the depression
- 56: protruding flange
- 56': first protruding flange
- 56": second protruding flange
- 56'": third protruding flange
- 56ʺʺ: fourth protruding flange
- 57: protruding structure on body of front piece extending distally of the distally facing surface of the body 53 of front piece
- 58: distally facing surface of the body 53 of front piece

- 60: depression formed in distalmost surface of front piece
- 61: first sidewall of depression - facing a second sidewall of the depression
- 62: second sidewall of the depression - facing the first sidewall of the depression
- 65: bottom/bottom surface of the depression
- 66: support surface
- 75: suction inlet formed through bottom surface of depression in front piece
- 80: vacuum distribution basin
- 100: workpiece
- 101: workpiece, first workpiece
- 102: workpiece, second workpiece
- 103: workpiece, third workpiece
- 104: workpiece, fourth workpiece
- 105: workpiece, fifth workpiece
- 106: workpiece, sixth workpiece
- 120: connector of second workpiece
- 156: first contour, contour of workpiece
- 161: first surface of workpiece facing away from a second surface of the workpiece
- 162: second surface of workpiece facing away from the first surface of the workpiece
- 200: jig
- 210': first stud-shaped connector
- 110": second bead-shaped connector
- 220: snap lock mechanism

## Claims

1. A picking device (1) for picking workpieces (100) having a predetermined shape from a worktable surface (2), the picking device (1) comprising
- a collector arm (10) having a first end (11) and a second end (12);
- a collector head (19) provided at the second end (12) of the collector arm (10);
the collector arm (10) being configured for moving the collector head (19) relative to the worktable surface (2), and aligning the collector head (19) relative to the workpiece (100) when the workpiece is located on the worktable surface (2), wherein the collector head (19) comprises
- a base (20) connecting to the second end (12) of the collector arm (10) and having a distal surface (22), and
- a front piece (50) arranged distalmost on the base (20) of the collector head (19),
wherein the front piece (50) comprises a body (53) formed in a resilient, pliable material, the body (53) comprising
- a proximal surface (51) at a proximal end (50') of the body (53) and configured for connecting to the distal surface (22) of the base (20);
- a distalmost surface (52, 52', 52") formed at an opposite, distal end (60") of the body (53) and parallel to the proximal surface (51);
a depression (60) extending in the proximal direction from the distalmost surface (52, 52', 52"), the depression having a bottom surface (65) and one or more sidewalls (61, 62) extending between the bottom surface (65) and the distalmost surface (52, 52', 52") wherein the depression (60) has a contour shaped to mate at least a portion of the shape of the workpiece,
such that when the contour of the depression (60) is aligned with the mating part of the shape of the workpiece (100) on the worktable surface (2), and when the collector head (19) is pressed over the workpiece (100), at least the mating portion of the workpiece (100) is received in the depression (60), and
such that the one or more sidewalls (61, 62) of the depression (60) squeezes on surfaces (161, 162) of the workpiece (100) to hold the workpiece (100) in place between the sidewalls (61, 62) of the depression (60), when the collector head (19) is lifted from the worktable surface (2), such that the sidewalls of the depression deforms to receive the surfaces of the workpiece in a press fit between the sidewalls of the depression, and
wherein a bottom (65) of the depression (60) is distal relative to the proximal surface (51) of the front piece (50).

2. A picking device (1) according to claim 1, wherein each of said sidewalls (61, 62) of the front piece (50) has a portion which extends perpendicularly relative to the distalmost surface (52, 52', 52").

3. A picking device (1) according to claim 1 or 2, wherein a depth of the depression (60) from a rim (55) between the distalmost surface (52, 52', 52") and the sidewall(s) (61, 62) of the depression (60) to a bottom surface (65) of the depression (60) at least corresponds to one-half of a thickness of the workpiece (100) at a location between said two surfaces (161, 162) of the workpiece facing away from each other.

4. A picking device (1) according to any one of the claims 1-3, wherein the sidewalls (61, 62) of the depression (60) are mutually facing, where a common longitudinal axis is defined along the mutually facing sidewalls (61, 62), and where the depression (60) has a first end and a second end in the direction of the longitudinal axis.

5. A picking device (1) according to claim 4, wherein a support surface (66) is provided in extension of the first and/or second end of the depression (60) in the direction of the longitudinal axis, and wherein said support surface (66) extends in a plane parallel to said bottom surface (65) of the depression (60).

6. A picking device (1) according to claim 5, wherein said support surface (66) is contoured to correspond to a contour of a second portion (110, 120, 130, 140) of the workpiece (100) to be picked.

7. A picking device (1) according to any one of the claims 1-6, wherein the resilient, pliable material of the front piece (50) is a silicone.

8. A picking device (1) according to any one of the claims 1-7, wherein the collector head (19) comprises an intermediary part (40) and wherein a first end (41) of the intermediary part (40) is connected to the distal end (21) of the base (20) and wherein a second end (42) of the intermediary part (40) connects to the proximal end (51) of the front piece (50).

9. A picking device (1) according to any one of the claims 1-7, wherein the collector head (19) comprises
- a vacuum port (35) formed through base (20) and connectable to a vacuum pump; and
- a suction inlet (75) formed through the bottom surface (65) of the depression (60), the suction inlet (75) communicating with the vacuum port (35) of the base (20).

10. A picking device (1) according to claim 9, wherein a vacuum distributing basin (80) is formed in the bottom surface (65) of the depression (65) and into the body (53) of the front piece (50), and wherein the suction inlet (75) is formed in the vacuum distributing basin (80).

11. A picking device (1) according to any one of claims 1-10, configured for delivering a jet of pressurized gas through the bottom surface (65) of the front piece (50).

12. A method of picking workpieces (100) having a predetermined shape from a worktable surface (2), using a picking device (1) comprising
- a collector arm (10) having a first end (11) and a second end (12); and
- a collector head (19) provided at the second end (12) of the collector arm (10);
wherein the collector arm (10) is configured for moving the collector head (19) relative to the worktable surface (2), and aligning the collector head (19) relative to the workpiece (100) [when the workpiece is located on the worktable surface (2)]
wherein the collector head (19) comprises
- a base (20) connecting to the second end (12) of the collector arm (10) and having a distal surface (22), and
- a front piece (50) arranged distalmost on the base (20) of the collector head (19),
wherein the front piece (50) comprises a body (53), formed in a resilient, pliable material, the body (53) comprising
- a proximal surface (51) at a proximal end (50') of the body (53) and configured for connecting to the distal surface (22) of the the base (20);
- a distalmost surface (52, 52', 52") at an opposite, distal end (60") of the body (53), and parallel to the proximal surface (51); and
- a depression (60) extending in the proximal direction from the distalmost surface (52, 52', 52"), the depression having a bottom surface (65) and one or more sidewalls (61, 62) extending between the bottom surface (65) and the distalmost surface (52, 52', 52"),
wherein the depression (60) has a contour shaped to mate with at least a portion of the shape of the workpiece (100),
wherein a bottom (65) of the depression (60) is distal relative to the proximal surface (51) of the front piece (50)
wherein the method comprises
- placing the collector head (19) over a workpiece such that the sidewalls (61, 62) of the depression (60) are aligned with the mating portion of the shape of the workpiece (100);
- pressing the collector head (19) over at least the mating portion of the workpiece (100) such that at least the mating portion of the workpiece (100) is received in the depression (60) and the sidewalls (61, 62) are deformed to squeeze on surfaces (161, 162) of the workpiece (100), such that the sidewalls of the depression deforms to receive the surfaces of the workpiece in a press fit between the sidewalls of the depression;
- lifting the collector head (19) with the workpiece (100) held in place between the sidewalls (61, 62) of the depression (60).

13. A method of picking workpieces (100) according to claim 12, further comprising applying a vacuum to the depression (60) to suck the workpiece (100) into contact with the depression (100).

14. A method of picking workpieces (100) according to claim 12 or 13, further comprising moving said collector arm (10) to move the collector head (19) with the workpiece (100) to a second position, and releasing the workpiece (100) from the depression (60) by a jet of pressurized gas delivered to the depression from a source of pressurized gas through the collector head (19).

15. A method of manufacturing front piece (50) for a collector head (19) for a picking device (1) for picking workpieces (100) having a predetermined shape from a worktable surface (2), the method comprising
- determining a shape of at least a portion of the workpieces (100),
- determining a shape of a distal surface (22) of a base (20) of the collector head (19) of the picking device (1);
- forming, in a in a resilient, pliable material, a body (53) of the front piece (50) such that the body (53) comprises
∘ a proximal surface (51) at a proximal end (50') of the body (53) and configured for connecting to the distal surface (22) of the base (20);
∘ a distalmost surface (52, 52', 52") formed at an opposite, distal end (60") of the body (53) and parallel to the proximal surface (51);
∘ a depression (60) extending in the proximal direction from the distalmost surface (52, 52', 52"), the depression having a bottom surface (65) and one or more sidewalls (61, 62) extending between the bottom surface (65) and the distalmost surface (52, 52', 52"), and where a bottom (65) of the depression (60) is distal relative to the proximal surface (51) of the front piece (50),
such that the depression (60) is dimensioned to allow a deformation of at least the sidewalls (61, 62) of the depression (60) when a collector head (19) is aligned with and pressed over the workpiece (100), and to the effect that the workpiece (100) is held in a press fit by the sidewalls (61, 62) of the depression when the collector head (19) is lifted.

## Patentansprüche

1. Kommissioniervorrichtung (1) zum Kommissionieren von Werkstücken (100), die eine vorbestimmte Form aufweisen, von einer Arbeitstischoberfläche (2), die Kommissioniervorrichtung (1) umfassend
- einen Sammelarm (10), der ein erstes Ende (11) und ein zweites Ende (12) aufweist;
- einen Sammelkopf (19), der am zweiten Ende (12) des Sammelarms (10) bereitgestellt ist;
wobei der Sammelarm (10) so konfiguriert ist, dass er den Sammelkopf (19) relativ zur Arbeitstischoberfläche (2) bewegt und den Sammelkopf (19) relativ zum Werkstück (100) ausrichtet, wenn sich das Werkstück auf der Arbeitstischoberfläche (2) befindet, wobei der Sammelkopf (19) Folgendes umfasst
- eine Basis (20), die mit dem zweiten Ende (12) des Sammelarms (10) verbunden ist und eine distale Oberfläche (22) aufweist, und
- ein Vorderteil (50), das am weitesten distal an der Basis (20) des Sammelkopfes (19) angeordnet ist,
wobei das Vorderteil (50) einen Körper (53) umfasst, der aus einem elastischen, biegsamen Material ausgebildet ist, der Körper (53) umfassend
- eine proximale Oberfläche (51) an einem proximalen Ende (50') des Körpers (53), die zur Verbindung mit der distalen Oberfläche (22) der Basis (20) konfiguriert ist;
- eine am weitesten distal gelegene Oberfläche (52, 52', 52"), die an einem gegenüberliegenden, distalen Ende (60") des Körpers (53) ausgebildet ist und parallel zur proximalen Oberfläche (51);
eine Vertiefung (60), die sich in der proximalen Richtung von der am weitesten distal gelegenen Oberfläche (52, 52', 52") aus erstreckt, wobei die Vertiefung eine Bodenfläche (65) und eine oder mehrere Seitenwände (61, 62) aufweist, die sich zwischen der Bodenfläche (65) und der am weitesten distal gelegenen Oberfläche (52, 52', 52") erstrecken, wobei die Vertiefung (60) eine Kontur aufweist, die so geformt ist, dass sie mindestens mit einem Abschnitt der Form des Werkstücks zusammenpasst,
sodass, wenn die Kontur der Vertiefung (60) mit dem Gegenstück der Form des Werkstücks (100) auf der Arbeitstischoberfläche (2) ausgerichtet ist und wenn der Sammelkopf (19) über das Werkstück (100) gepresst wird, mindestens der Gegenabschnitt des Werkstücks (100) in der Vertiefung (60) aufgenommen wird, und
sodass die eine oder die mehreren Seitenwände (61, 62) der Vertiefung (60) auf Oberflächen (161, 162) des Werkstücks (100) drücken, um das Werkstück (100) zwischen den Seitenwänden (61, 62) der Vertiefung (60) festzuhalten, wenn der Sammelkopf (19) von der Arbeitstischoberfläche (2) angehoben wird, sodass sich die Seitenwände der Vertiefung verformen, um die Oberflächen des Werkstücks in einer Presspassung zwischen den Seitenwänden der Vertiefung aufzunehmen, und
wobei sich ein Boden (65) der Vertiefung (60) relativ zur proximalen Oberfläche (51) des Vorderteils (50) distal befindet.

2. Kommissioniervorrichtung (1) nach Anspruch 1, wobei jede der Seitenwände (61, 62) des Vorderteils (50) einen Abschnitt aufweist, der sich relativ zur am weitesten distal gelegenen Oberfläche (52, 52', 52") senkrecht erstreckt.

3. Kommissioniervorrichtung (1) nach Anspruch 1 oder 2, wobei eine Tiefe der Vertiefung (60) von einem Rand (55) zwischen der am weitesten distal gelegenen Oberfläche (52, 52', 52") und der/den Seitenwand/Seitenwänden (61, 62) der Vertiefung (60) bis zu einer Bodenfläche (65) der Vertiefung (60) mindestens der Hälfte einer Dicke des Werkstücks (100) an einer Stelle zwischen den beiden voneinander abgewandten Oberflächen (161, 162) des Werkstücks entspricht.

4. Kommissioniervorrichtung (1) nach einem der Ansprüche 1-3, wobei die Seitenwände (61, 62) der Vertiefung (60) einander zugewandt sind, wobei eine gemeinsame Längsachse entlang der einander zugewandten Seitenwände (61, 62) definiert ist, und wobei die Vertiefung (60) ein erstes Ende und ein zweites Ende in die Richtung der Längsachse aufweist.

5. Kommissioniervorrichtung (1) nach Anspruch 4, wobei in Verlängerung des ersten und/oder zweiten Endes der Vertiefung (60) in die Richtung der Längsachse eine Auflagefläche (66) bereitgestellt ist, und wobei sich die Auflagefläche (66) in einer Ebene parallel zur Bodenfläche (65) der Vertiefung (60) erstreckt.

6. Kommissioniervorrichtung (1) nach Anspruch 5, wobei die Auflagefläche (66) so konturiert ist, dass sie einer Kontur eines zweiten Abschnitts (110, 120, 130, 140) des zu kommissionierenden Werkstücks (100) entspricht.

7. Kommissioniervorrichtung (1) nach einem der Ansprüche 1-6, wobei das elastische, biegsame Material des Vorderteils (50) ein Silikon ist.

8. Kommissioniervorrichtung (1) nach einem der Ansprüche 1-7, wobei der Sammelkopf (19) ein Zwischenteil (40) umfasst und wobei ein erstes Ende (41) des Zwischenteils (40) mit dem distalen Ende (21) der Basis (20) verbunden ist und wobei ein zweites Ende (42) des Zwischenteils (40) mit dem proximalen Ende (51) des Vorderteils (50) verbunden ist.

9. Kommissioniervorrichtung (1) nach einem der Ansprüche 1-7, wobei der Sammelkopf (19) Folgendes umfasst
- einen Vakuumanschluss (35), der durch die Basis (20) hindurch ausgebildet und an eine Vakuumpumpe verbunden werden kann; und
- einen Saugeinlass (75), der durch die Bodenfläche (65) der Vertiefung (60) ausgebildet ist, wobei der Saugeinlass (75) mit dem Vakuumanschluss (35) der Basis (20) in Verbindung steht.

10. Kommissioniervorrichtung (1) nach Anspruch 9, wobei in der Bodenfläche (65) der Vertiefung (65) und in den Körper (53) des Vorderteils (50) hinein ein Vakuumverteilungsbecken (80) ausgebildet ist, und wobei der Saugeinlass (75) in dem Vakuumverteilungsbecken (80) ausgebildet ist.

11. Kommissioniervorrichtung (1) nach einem der Ansprüche 1-10, die so konfiguriert ist, dass sie einen Druckgasstrahl durch die Bodenfläche (65) des Vorderteils (50) abgibt.

12. Verfahren zum Kommissionieren von Werkstücken (100), die eine vorbestimmte Form aufweisen, von einer Arbeitstischoberfläche (2) unter Verwendung einer Kommissioniervorrichtung (1), umfassend
- einen Sammelarm (10), der ein erstes Ende (11) und ein zweites Ende (12) aufweist; und
- einen Sammelkopf (19), der am zweiten Ende (12) des Sammelarms (10) bereitgestellt ist;
wobei der Sammelarm (10) so konfiguriert ist, dass er den Sammelkopf (19) relativ zur Arbeitstischoberfläche (2) bewegt und den Sammelkopf (19) relativ zum Werkstück (100) ausrichtet, [wenn sich das Werkstück auf der Arbeitstischoberfläche (2) befindet]
wobei der Sammelkopf (19) Folgendes umfasst
- eine Basis (20), die mit dem zweiten Ende (12) des Sammelarms (10) verbunden ist und eine distale Oberfläche (22) aufweist, und
- ein Vorderteil (50), das am weitesten distal an der Basis (20) des Sammelkopfes (19) angeordnet ist,
wobei das Vorderteil (50) einen Körper (53) umfasst, der aus einem elastischen, biegsamen Material ausgebildet ist, der Körper (53) umfassend
- eine proximale Oberfläche (51) an einem proximalen Ende (50') des Körpers (53), die zur Verbindung mit der distalen Oberfläche (22) der Basis (20) konfiguriert ist;
- eine am weitesten distal gelegene Oberfläche (52, 52', 52") an einem gegenüberliegenden, distalen Ende (60") des Körpers (53) und parallel zur proximalen Oberfläche (51); und
- eine Vertiefung (60), die sich in der proximalen Richtung von der am weitesten distal gelegenen Oberfläche (52, 52', 52") aus erstreckt, wobei die Vertiefung eine Bodenfläche (65) und eine oder mehrere Seitenwände (61, 62) aufweist, die sich zwischen der Bodenfläche (65) und der am weitesten distal gelegenen Oberfläche (52, 52', 52") erstrecken,
wobei die Vertiefung (60) eine Kontur aufweist, die so geformt ist, dass sie mindestens mit einem Abschnitt der Form des Werkstücks zusammenpasst,
wobei sich ein Boden (65) der Vertiefung (60) relativ zur proximalen Oberfläche (51) des Vorderteils (50) distal befindet,
wobei das Verfahren Folgendes umfasst
- Aufsetzen des Sammelkopfes (19) auf ein Werkstück, sodass die Seitenwände (61, 62) der Vertiefung (60) mit dem Gegenabschnitt der Form des Werkstücks (100) ausgerichtet sind;
- Drücken des Sammelkopfes (19) über mindestens den Gegenabschnitt des Werkstücks (100), sodass mindestens der Gegenabschnitt des Werkstücks (100) in der Vertiefung (60) aufgenommen wird und die Seitenwände (61, 62) verformt werden, um auf Oberflächen (161, 162) des Werkstücks (100) zu drücken, sodass sich die Seitenwände der Vertiefung verformen, um die Oberflächen des Werkstücks in einer Presspassung zwischen den Seitenwänden der Vertiefung aufzunehmen;
- Anheben des Sammelkopfes (19), wobei das Werkstück (100) zwischen den Seitenwänden (61, 62) der Vertiefung (60) festgehalten wird.

13. Verfahren zum Kommissionieren von Werkstücken (100) nach Anspruch 12, das weiter das Anlegen eines Vakuums an die Vertiefung (60) umfasst, um das Werkstück (100) in Kontakt mit der Vertiefung (100) zu saugen.

14. Verfahren zum Kommissionieren von Werkstücken (100) nach Anspruch 12 oder 13, das weiter das Bewegen des Sammelarms (10) umfasst, um den Sammelkopf (19) mit dem Werkstück (100) in eine zweite Stellung zu bewegen, und das Freigeben des Werkstücks (100) aus der Vertiefung (60) durch einen Druckgasstrahl, der von einer Druckgasquelle durch den Sammelkopf (19) in die Vertiefung abgegeben wird.

15. Verfahren zur Herstellung eines Vorderteils (50) für einen Sammelkopf (19) für eine Kommissioniervorrichtung (1) zum Kommissionieren von Werkstücken (100), die eine vorbestimmte Form aufweisen, von einer Arbeitstischoberfläche (2), das Verfahren umfassend
- Bestimmen einer Form von mindestens einem Abschnitt der Werkstücke (100),
- Bestimmen einer Form einer distalen Oberfläche (22) einer Basis (20) des Sammelkopfes (19) der Kommissioniervorrichtung (1);
- Ausbilden eines Körpers (53) des Vorderteils (50) aus einem elastischen, biegsamen Material, sodass der Körper (53) Folgendes umfasst
- eine proximale Oberfläche (51) an einem proximalen Ende (50') des Körpers (53), die zur Verbindung mit der distalen Oberfläche (22) der Basis (20) konfiguriert ist;
- eine am weitesten distal gelegene Oberfläche (52, 52', 52"), die an einem gegenüberliegenden, distalen Ende (60") des Körpers (53) ausgebildet ist und parallel zur proximalen Oberfläche (51);
- eine Vertiefung (60), die sich in der proximalen Richtung von der am weitesten distal gelegenen Oberfläche (52, 52', 52") aus erstreckt, wobei die Vertiefung eine Bodenfläche (65) und eine oder mehrere Seitenwände (61, 62) aufweist, die sich zwischen der Bodenfläche (65) und der am weitesten distal gelegenen Oberfläche (52, 52', 52") erstrecken, und wobei sich ein Boden (65) der Vertiefung (60) relativ zur proximalen Oberfläche (51) des Vorderteils (50) distal befindet,
sodass die Vertiefung (60) so dimensioniert ist, dass mindestens die Seitenwände (61, 62) der Vertiefung (60) verformt werden können, wenn ein Sammelkopf (19) auf das Werkstück (100) ausgerichtet und darüber gepresst wird, und dass das Werkstück (100) von den Seitenwänden (61, 62) der Vertiefung in einer Presspassung gehalten wird, wenn der Sammelkopf (19) angehoben wird.

## Revendications

1. Dispositif de prélèvement (1) pour prélever des pièces à usiner (100) présentant une forme prédéterminée à partir d'une surface de table de travail (2), le dispositif de prélèvement (1) comprenant
- un bras collecteur (10) présentant une première extrémité (11) et une seconde extrémité (12) ;
- une tête collectrice (19) disposée à la seconde extrémité (12) du bras collecteur (10) ;
le bras collecteur (10) étant configuré pour déplacer la tête collectrice (19) par rapport à la surface de table de travail (2) et aligner la tête collectrice (19) par rapport à la pièce à usiner (100) lorsque la pièce à usiner se trouve sur la surface de table de travail (2), dans lequel la tête collectrice (19) comprend
- une base (20) reliée à la seconde extrémité (12) du bras collecteur (10) et présentant une surface distale (22), et
- une pièce avant (50) disposée de la manière la plus distale sur la base (20) de la tête collectrice (19),
dans lequel la pièce avant (50) comprend un corps (53) formé dans un matériau élastique et pliable, le corps (53) comprenant
- une surface proximale (51) à une extrémité proximale (50') du corps (53) et configurée pour être reliée à la surface distale (22) de la base (20) ;
- une surface la plus distale (52, 52', 52") formée à une extrémité distale opposée (60") du corps (53) et parallèle à la surface proximale (51) ;
une dépression (60) s'étendant dans la direction proximale depuis la surface la plus distale (52, 52', 52"), la dépression présentant une surface de fond (65) et une ou plusieurs parois latérales (61, 62) s'étendant entre la surface de fond (65) et la surface la plus distale (52, 52', 52"), dans lequel la dépression (60) présente un contour façonné pour correspondre à au moins une partie de la forme de la pièce à usiner,
de sorte que lorsque le contour de la dépression (60) est aligné avec la partie correspondante de la forme de la pièce à usiner (100) sur la surface de table de travail (2), et lorsque la tête collectrice (19) est pressée sur la pièce à usiner (100), au moins la partie correspondante de la pièce à usiner (100) est reçue dans la dépression (60), et
de telle sorte que les une ou plusieurs parois latérales (61, 62) de la dépression (60) se serrent sur les surfaces (161, 162) de la pièce à usiner (100) pour maintenir la pièce à usiner (100) en place entre les parois latérales (61, 62) de la dépression (60) lorsque la tête collectrice (19) est soulevée de la surface de table de travail (2), de telle sorte que les parois latérales de la dépression se déforment pour recevoir les surfaces de la pièce à usiner dans un ajustement serré entre les parois latérales de la dépression, et
dans lequel un fond (65) de la dépression (60) est distal par rapport à la surface proximale (51) de la pièce avant (50).

2. Dispositif de prélèvement (1) selon la revendication 1, dans lequel chacune desdites parois latérales (61, 62) de la pièce avant (50) présente une partie qui s'étend perpendiculairement par rapport à la surface la plus distale (52, 52', 52").

3. Dispositif de prélèvement (1) selon la revendication 1 ou 2, dans lequel une profondeur de la dépression (60) depuis un rebord (55) entre la surface la plus distale (52, 52', 52") et la(les) paroi(s) latérale(s) (61, 62) de la dépression (60) jusqu'à une surface de fond (65) de la dépression (60) correspond au moins à la moitié d'une épaisseur de la pièce à usiner (100) à un emplacement entre lesdites deux surfaces (161, 162) de la pièce à usiner orientées à l'opposé l'une de l'autre.

4. Dispositif de prélèvement (1) selon l'une quelconque des revendications 1-3, dans lequel les parois latérales (61, 62) de la dépression (60) se font face, où un axe longitudinal commun est défini le long des parois latérales (61, 62) se faisant face, et où la dépression (60) présente une première extrémité et une seconde extrémité dans la direction de l'axe longitudinal.

5. Dispositif de prélèvement (1) selon la revendication 4, dans lequel une surface de support (66) est prévue dans le prolongement de la première et/ou seconde extrémité de la dépression (60) dans la direction de l'axe longitudinal, et dans lequel ladite surface de support (66) s'étend dans un plan parallèle à ladite surface de fond (65) de la dépression (60).

6. Dispositif de prélèvement (1) selon la revendication 5, dans lequel ladite surface de support (66) est profilée pour correspondre à un contour d'une seconde partie (110, 120, 130, 140) de la pièce à usiner (100) à prélever.

7. Dispositif de prélèvement (1) selon l'une quelconque des revendications 1-6, dans lequel le matériau élastique et pliable de la pièce avant (50) est un silicone.

8. Dispositif de prélèvement (1) selon l'une quelconque des revendications 1-7, dans lequel la tête collectrice (19) comprend une partie intermédiaire (40) et dans lequel une première extrémité (41) de la partie intermédiaire (40) est reliée à l'extrémité distale (21) de la base (20) et dans lequel une seconde extrémité (42) de la partie intermédiaire (40) est reliée à l'extrémité proximale (51) de la pièce avant (50).

9. Dispositif de prélèvement (1) selon l'une quelconque des revendications 1-7, dans lequel la tête collectrice (19) comprend
- un orifice de vide (35) formé à travers la base (20) et pouvant être relié à une pompe à vide ; et
- une entrée d'aspiration (75) formée à travers la surface de fond (65) de la dépression (60), l'entrée d'aspiration (75) communiquant avec l'orifice de vide (35) de la base (20).

10. Dispositif de prélèvement (1) selon la revendication 9, dans lequel un bassin de distribution de vide (80) est formé dans la surface de fond (65) de la dépression (65) et dans le corps (53) de la pièce avant (50), et dans lequel l'entrée d'aspiration (75) est formée dans le bassin de distribution de vide (80).

11. Dispositif de prélèvement (1) selon l'une quelconque des revendications 1-10, configuré pour délivrer un jet de gaz sous pression à travers la surface de fond (65) de la pièce avant (50).

12. Procédé de prélèvement de pièces à usiner (100) présentant une forme prédéterminée à partir d'une surface de table de travail (2), utilisant un dispositif de prélèvement (1) comprenant
- un bras collecteur (10) présentant une première extrémité (11) et une seconde extrémité (12) ; et
- une tête collectrice (19) disposée à la seconde extrémité (12) du bras collecteur (10) ;
dans lequel le bras collecteur (10) est configuré pour déplacer la tête collectrice (19) par rapport à la surface de table de travail (2) et aligner la tête collectrice (19) par rapport à la pièce à usiner (100) [lorsque la pièce à usiner se trouve sur la surface de table de travail (2)]
dans lequel la tête collectrice (19) comprend
- une base (20) reliée à la seconde extrémité (12) du bras collecteur (10) et présentant une surface distale (22), et
- une pièce avant (50) disposée de la manière la plus distale sur la base (20) de la tête collectrice (19),
dans lequel la pièce avant (50) comprend un corps (53) formé dans un matériau élastique et pliable, le corps (53) comprenant
- une surface proximale (51) à une extrémité proximale (50') du corps (53) et configurée pour être reliée à la surface distale (22) de la base (20) ;
- une surface la plus distale (52, 52', 52") à une extrémité distale opposée (60") du corps (53) et parallèle à la surface proximale (51) ; et
- une dépression (60) s'étendant dans la direction proximale depuis la surface la plus distale (52, 52', 52"), la dépression présentant une surface de fond (65) et une ou plusieurs parois latérales (61, 62) s'étendant entre la surface de fond (65) et la surface la plus distale (52, 52', 52"),
dans lequel la dépression (60) présente un contour façonné pour correspondre à au moins une partie de la forme de la pièce à usiner (100),
dans lequel un fond (65) de la dépression (60) est distal par rapport à la surface proximale (51) de la pièce avant (50),
dans lequel le procédé comprend
- la mise en place de la tête collectrice (19) au-dessus d'une pièce à usiner de telle sorte que les parois latérales (61, 62) de la dépression (60) soient alignées avec la partie correspondante de la forme de la pièce à usiner (100) ;
- le pressage de la tête collectrice (19) sur au moins la partie correspondante de la pièce à usiner (100) de telle sorte qu'au moins la partie correspondante de la pièce à usiner (100) soit reçue dans la dépression (60) et les parois latérales (61, 62) soient déformées pour se serrer sur les surfaces (161, 162) de la pièce à usiner (100), de telle sorte que les parois latérales de la dépression se déforment pour recevoir les surfaces de la pièce à usiner dans un ajustement serré entre les parois latérales de la dépression ;
- le soulèvement de la tête collectrice (19) avec la pièce à usiner (100) maintenue en place entre les parois latérales (61, 62) de la dépression (60).

13. Procédé de prélèvement de pièces à usiner (100) selon la revendication 12, comprenant en outre l'application d'un vide à la dépression (60) pour aspirer la pièce à usiner (100) en contact avec la dépression (100).

14. Procédé de prélèvement de pièces à usiner (100) selon la revendication 12 ou 13, comprenant en outre le déplacement dudit bras collecteur (10) pour déplacer la tête collectrice (19) avec la pièce à usiner (100) vers une seconde position, et la libération de la pièce à usiner (100) de la dépression (60) par un jet de gaz sous pression délivré à la dépression à partir d'une source de gaz sous pression à travers la tête collectrice (19).

15. Procédé de fabrication de pièce avant (50) pour une tête collectrice (19) pour un dispositif de prélèvement (1) destiné à prélever des pièces à usiner (100) présentant une forme prédéterminée à partir d'une surface de table de travail (2), le procédé comprenant
- la détermination d'une forme d'au moins une partie des pièces à usiner (100),
- la détermination d'une forme d'une surface distale (22) d'une base (20) de la tête collectrice (19) du dispositif de prélèvement (1) ;
- la formation, dans un matériau élastique et pliable, d'un corps (53) de la pièce avant (50) de telle sorte que le corps (53) comprenne
- une surface proximale (51) à une extrémité proximale (50') du corps (53) et configurée pour être reliée à la surface distale (22) de la base (20) ;
- une surface la plus distale (52, 52', 52") formée à une extrémité distale opposée (60") du corps (53) et parallèle à la surface proximale (51) ;
- une dépression (60) s'étendant dans la direction proximale depuis la surface la plus distale (52, 52', 52"), la dépression présentant une surface de fond (65) et une ou plusieurs parois latérales (61, 62) s'étendant entre la surface de fond (65) et la surface la plus distale (52, 52', 52"), et où un fond (65) de la dépression (60) est distal par rapport à la surface proximale (51) de la pièce avant (50),
de telle sorte que la dépression (60) soit dimensionnée pour permettre une déformation d'au moins les parois latérales (61, 62) de la dépression (60) lorsqu'une tête collectrice (19) est alignée avec et pressée sur la pièce à usiner (100), et à l'effet que la pièce à usiner (100) est maintenue dans un ajustement serré par les parois latérales (61, 62) de la dépression lorsque la tête collectrice (19) est soulevée.
